# DEMANDE DE BREVET EUROPEEN

(11) **EP 4 821 723 A1**
(43) Date de publication de la demande: **14.10.2026**
(21) Numéro de dépôt: 26166176.3
(22) Date de dépôt: 19.03.2026
(51) Int. Cl.: B60K 1/04, B60L 50/64

(54) **CAISSON DE BATTERIE DE TRACTION DE VEHICULE AVEC DIMENSION AJUSTABLE AU NOMBRE DE MODULES DE CELLULES**

(30) Priorité: 07.04.2025 FR 2503613
(71) Demandeur: Stellantis Auto SAS, 78300 Poissy (FR)
(72) Inventeur: GALIDIE, STEPHAN, 40120 SARBAZAN (FR); TIXIER, JULIEN, 78460 CHEVREUSE (FR)
(74) Mandataire: PSIP

(57) **Abrégé**

Caisson de batterie de traction d'un véhicule automobile électrique ou hybride, comportant une ouverture permettant d'entrer un nombre variable de modules (30) de cellules électrochimiques alignés suivant une direction longitudinale, et des systèmes de connexion électriques (24, 26) recevant chacun de ces modules (30), le caisson de batterie (2) comportant une partie mobile (12) qui se déplace pour s'ajuster au nombre de modules (30) reçus, et les systèmes de connexion électriques (24, 26) comportant un dispositif d'adaptation qui suit le déplacement de la partie mobile de caisson (12) en assurant une connexion électrique à tous les modules reçus (30).

## Description

. La présente invention concerne un caisson de batterie de traction d'un véhicule automobile électrique ou hybride comportant une dimension ajustable suivant le nombre de modules, ainsi qu'un procédé de mise en œuvre de ce caisson de batterie et un véhicule électrique ou hybride équipé de ce caisson.

Un type de système d'échange de modules de batterie de traction connu pour un véhicule électrique ou hybride, présenté notamment par le document US- A1-20200406780, comporte un véhicule disposant d'un caisson plat sous le plancher de l'habitacle recevant les modules de cellules électrochimiques en nombre variable, et un dispositif de gestion permettant d'échanger et d'installer dans ce caisson le nombre de modules demandé.

De cette manière on dispose d'une flexibilité permettant d'embarquer le nombre de modules donnant une autonomie adaptée pour l'utilisation prévue, ce qui permet à la fois une grande autonomie si nécessaire en chargeant tous les modules, et de réduire au minimum ce nombre de modules pour une autonomie demandée plus faible ce qui limite la masse totale du véhicule, l'énergie perdue pour son déplacement à cause de cette masse, et les coûts de fonctionnement.

Toutefois ce type de véhicule commun utilisé pour une gamme de véhicules ne permet pas de prévoir des caissons de tailles variables recevant un nombre ajusté de modules, afin de réaliser différents types de véhicules présentant pour chacun une quantité d'énergie adaptée et un volume de caisson juste nécessaire.

Un autre type de véhicule automobile électrique ou hybride connu, présenté notamment par le document FR-A1-3140583, comporte sous l'habitacle vers l'avant et vers l'arrière des jeux de renforts de tôle qui reçoivent les fixations des extrémités d'un caisson de batterie venant par en dessous de la caisse. Chaque extrémité du caisson de batterie comporte des perçages recevant des vis se fixant sous les jeux de renforts de tôle pour former ces fixations.

Un des jeux de renforts de tôle avant ou arrière comporte plusieurs perçages alignés suivant la direction longitudinale du véhicule, permettant de recevoir des caissons de longueurs différentes recevant un nombre variable de modules de cellules.

De cette manière on obtient pour une même famille de véhicules un soubassement de caisse modulaire permettant d'ajuster la longueur du caisson de batterie reçu en dessous, et son volume pour recevoir un nombre variable de modules donnant des capacités de stockage d'énergie particulière afin de l'adapter aux besoins de plusieurs types de véhicules.

Toutefois dans le cas d'une gamme de véhicule comportant plusieurs modèles avec un nombre varié de modules de cellules donnant des capacités de stockage d'énergie différentes, il est alors nécessaire de réaliser plusieurs types de caissons présentant des dimensions spécifiques ce qui complique les études et la fabrication de ces caissons, ajoute une complexité de gestion dans les usines d'assemblage des véhicules, et entraîne des coûts supplémentaires.

De plus après avoir installé dans le véhicule un type de caisson de batterie recevant un nombre défini de modules, il n'est plus possible d'ajouter des modules supplémentaires afin d'augmenter occasionnellement l'autonomie du véhicule.

La présente invention a notamment pour but d'éviter ces problèmes de l'art antérieur.

Elle propose à cet effet un caisson de batterie de traction d'un véhicule automobile électrique ou hybride, comportant une ouverture permettant d'entrer un nombre variable de modules de cellules électrochimiques alignés suivant une direction longitudinale, et des barres de connexion électriques recevant chacun de ces modules, ce caisson étant remarquable en ce qu'il comporte une partie mobile qui se déplace pour s'ajuster au nombre de modules reçus, et en ce que les systèmes de connexion électriques comportent pour chaque pôle électrique du module une barre de connexion fixe, et une barre de connexion mobile qui prolonge cette barre fixe en coulissant quand la partie mobile de caisson se déplace en augmentant le volume du caisson , en assurant une connexion électrique à tous les modules reçus.

Un avantage de ce caisson de batterie est qu'il permet de produire un même modèle de caisson pour une gamme de véhicule, et suivant la quantité d'énergie demandée pour chaque type de véhicule de cette gamme d'ajuster son volume en déplaçant la partie mobile suivant le nombre variable de modules à prévoir donnant l'autonomie recherchée, avec une connexion de tous les modules qui reste assurée grâce à son dispositif d'adaptation.

La partie mobile du caisson permet avec le même modèle de caisson d'obtenir un encombrement minium au plus juste suivant le nombre de modules reçus, en évitant de perdre de la place dans le véhicule.

On peut disposer un même caisson standard sur une gamme de véhicule présentant des espaces disponibles différents pour le recevoir, comprenant notamment un petit véhicule avec une faible autonomie suffisante et peu d'espace disponible et un grand véhicule avec une autonomie importante et plus d'espace. On ajuste au mieux la masse du véhicule suivant son utilisation et les coûts de fabrication, d'entretien et de roulage.

Le caisson de batterie selon l'invention peut comporter de plus une ou plusieurs des caractéristiques suivantes, qui peuvent être combinées entre elles.

Avantageusement, la partie mobile de caisson coulisse suivant la direction longitudinale.

Dans ce cas, avantageusement la partie mobile de caisson entoure la partie fixe en coulissant dessus tout en assurant une étanchéité entre ces deux parties.

Avantageusement, le caisson comporte un poussoir disposé suivant la direction longitudinale, poussant les modules après leur dépose en face de l'ouverture dans la direction de déplacement de la partie mobile qui agrandit le volume du caisson.

Dans ce cas, avantageusement le poussoir comporte une course suivant un pas qui est égale à la largeur de chaque module.

En particulier l'ouverture peut être formée sur le dessus du caisson avec une trappe de fermeture disposant d'une étanchéité.

Avantageusement, la partie mobile de caisson comporte des ressorts de rappel qui tendent à réduire le volume du caisson.

L'invention a aussi pour objet un procédé d'utilisation d'un caisson de batterie comprenant l'une quelconque des caractéristiques précédentes, remarquable en ce qu'il comporte une étape d'insertion d'un module dans le caisson, puis une étape de coulissement de ce module pour le déplacer vers un fond du caisson avec un déplacement de la partie mobile de caisson quand la partie fixe de caisson est remplie.

L'invention a de plus pour objet un véhicule automobile électrique ou hybride comportant un caisson de batterie comprenant l'une quelconque des caractéristiques précédentes, remarquable en ce que l'ouverture du caisson est disposée en face d'une ouverture d'un plancher du véhicule.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est un schéma en coupe longitudinale suivant un plan vertical d'un caisson de batterie selon l'invention recevant un module de cellules ;
[Fig. 2] est un schéma en coupe transversale de ce caisson suivant le plan de coupe II-II ;
[Fig. 3] est un schéma présentant l'avance du premier module ;
[Fig. 4] est un schéma présentant la dépose d'un deuxième module ;
[Fig. 5] est un schéma présentant après l'avance des trois premiers modules la dépose d'un quatrième module qui remplit la partie principale du caisson ;
[Fig. 6] est un schéma présentant une avance de la partie mobile du caisson pour un module complémentaire ; et
[Fig. 7] est un schéma présentant le remplissage du caisson avec son extension pour deux modules complémentaires.

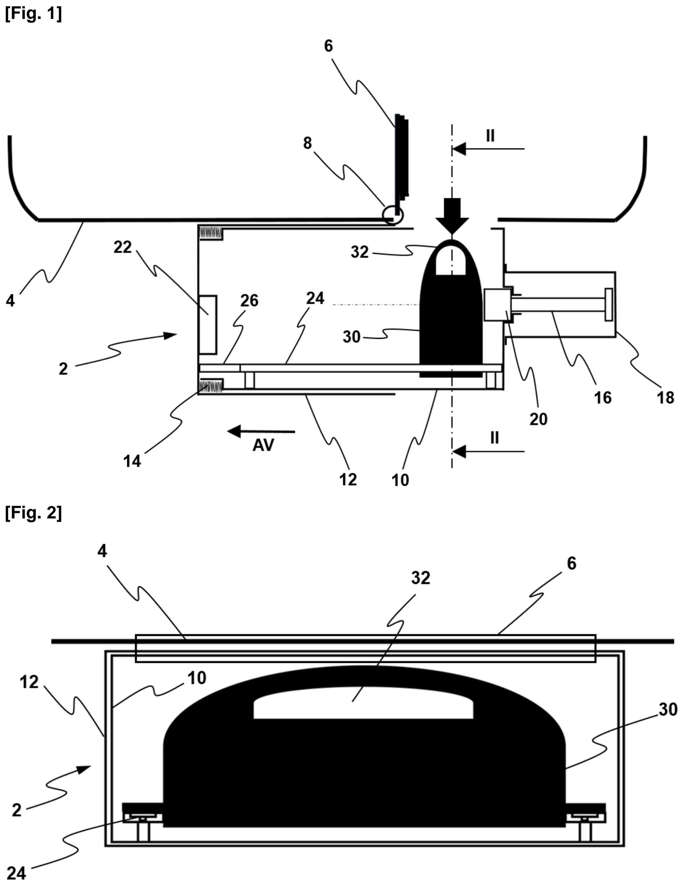

Les figures 1 et 2 présentent un caisson de batterie 2 fixé sous un plancher 4 de l'habitacle d'un véhicule électrique ou hybride, comportant une trappe supérieure 6 montée sur un pivot latéral 8 qui ferme à la fois le plancher et le caisson avec une étanchéité.

Le caisson 2 comportant une forme parallélépipédique comprenant une direction axiale avec un côté avant AV, est formé par une partie arrière fixe 10 recevant une partie avant coulissante 12 la recouvrant de manière à pouvoir coulisser axialement pour augmenter sa longueur tout en restant fermé et étanche.

La face arrière de la partie fixe de caisson 10 comporte un boîtier extérieur 16 contenant un vérin 18 disposé horizontalement suivant l'axe médian du caisson 2, disposant d'un poussoir avant 20 qui rentre dans ce caisson. La face avant de la partie coulissante de caisson 12 comporte à l'intérieur une butée centrale de fin de course 22.

Le vérin forme un poussoir qui peut comporter tout type d'actionnement, notamment un actionnement manuel avec par exemple un levier, ou un actionnement motorisé électrique ou hydraulique, qui peut être commandé par l'opérateur ou automatiquement par une détection des modules 30 déposés.

Le caisson 2 comporte à sa base et de chaque côté un ressort hélicoïdal de traction axiale 14 relié d'un côté à la partie fixe 10 et de l'autre à la partie mobile 12, qui exerce constamment une force de rappel vers l'arrière sur cette partie mobile pour la remettre en position reculée maximum afin de donner le plus petit volume occupé par le caisson.

Le caisson 2 comporte vers le bas de chaque côté une barre de connexion électrique fixe 24 disposée parallèlement à l'axe, qui se prolonge du côté avant par une barre coulissante 26 fixée à la partie mobile de caisson 12 pour le suivre dans son mouvement tout en restant connectée à sa barre fixe.

Le caisson 2 reçoit des modules de cellules électrochimiques 30 présentant un volume plat allongé suivant la direction transversale du caisson, disposant d'une poignée supérieure 32, qui est descendu à l'arrière du caisson après avoir ouvert la trappe 6.

Chaque module 30 comporte à sa base, de chaque côté, un connecteur électrique qui lors de sa descente dans le caisson 2 se pose sur les deux barres fixes 24 pour réaliser automatiquement une connexion électrique de ses deux pôles avec le circuit de puissance du véhicule qui alimente une machine de traction.

L'ouverture de la trappe 6 dégage un passage dans le plancher de l'habitacle 4 et sur le dessus du caisson 2 formant un guidage qui permet une descente du module 30 dans une position suffisamment précise pour ajuster automatiquement ses connecteurs sur les barres de connexion fixes 24.

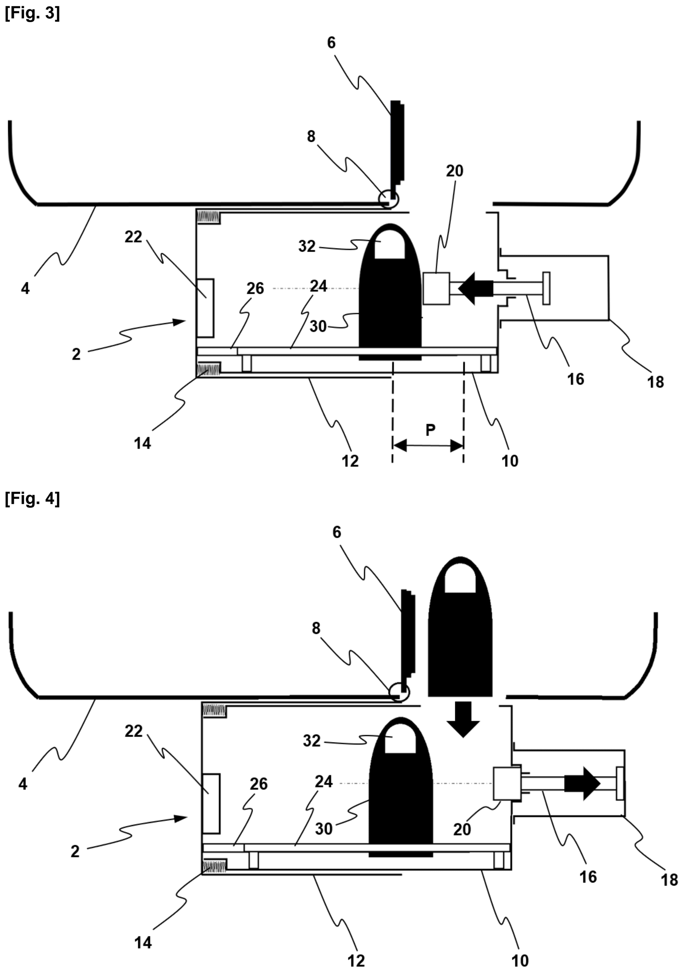

La figure 3 présente après la descente du module 30 sous l'ouverture de la trappe 6, une poussée axiale du vérin 18 qui fait coulisser ce module vers l'avant suivant une distance égale à un pas P correspondant à l'épaisseur du module.

Les connexions électriques des pôles du module 30 restent activées en coulissant sur les barres de connexion fixes 24.

La figure 4 présente le retrait du vérin 18 vers l'arrière, qui laisse la place pour la descente d'un nouveau module 30 dans l'alignement de l'ouverture de la trappe 6.

De la même manière les connecteurs du module déposé 30 s'ajustent sur les barres fixes de connexion 24, ce qui donne deux modules branchés en parallèle sur le circuit de puissance du véhicule, et un doublement de la quantité d'énergie stockée.

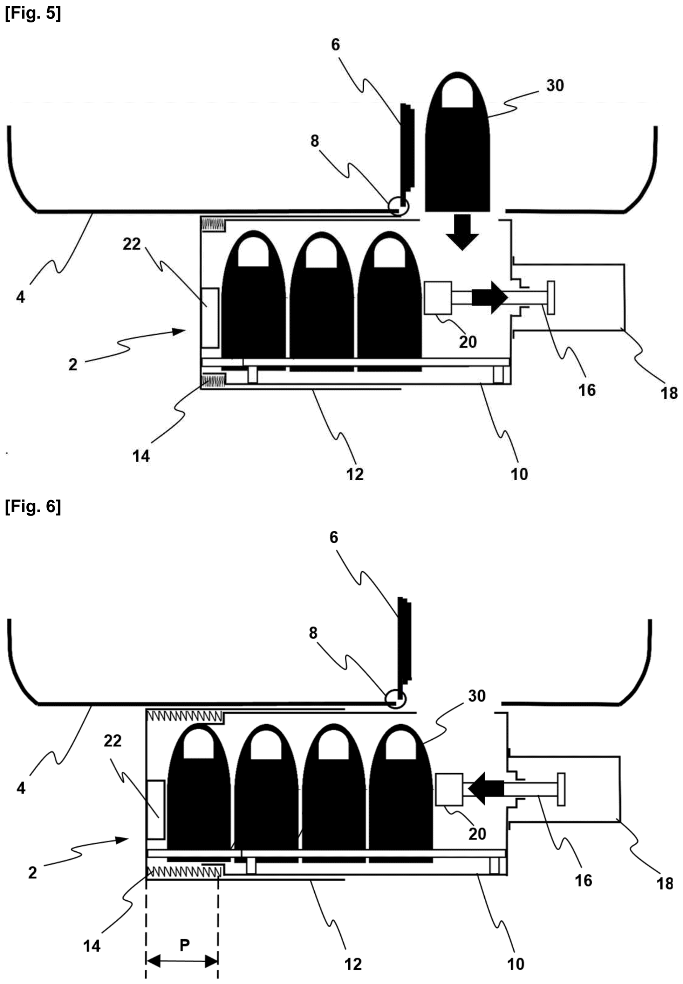

La figure 5 présente après la dépose d'un troisième module 30, la poussée vers l'avant de l'ensemble de ces modules par le vérin 18 qui met le module le plus en avant en appui sur la butée avant de fin de course 22 disposée au fond de la partie mobile de caisson 12.

Un quatrième module 30 est en attente au-dessus de l'ouverture de la trappe 6.

La figure 6 présente après la descente du quatrième module 30, la poussée axiale vers l'avant par le vérin 18 qui oblige la partie mobile de caisson 12 à suivre ce mouvement avec une extension des ressorts de rappel 14.

L'ensemble des quatre modules 30 présents dans le caisson 2 avance de la même manière suivant un pas P correspondant à l'épaisseur de chaque module 30, ce qui libère le volume en dessous de l'ouverture de la trappe 6 pour recevoir un module complémentaire, et décale vers l'avant la partie mobile de caisson 12 suivant une même distance.

Lors de cette avancée les connecteurs du premier module 30 vers l'avant passent sur les barres de connexion mobiles 26 reliées chacune à sa barre de connexion fixe 24, ce qui assure la continuité du circuit électrique.

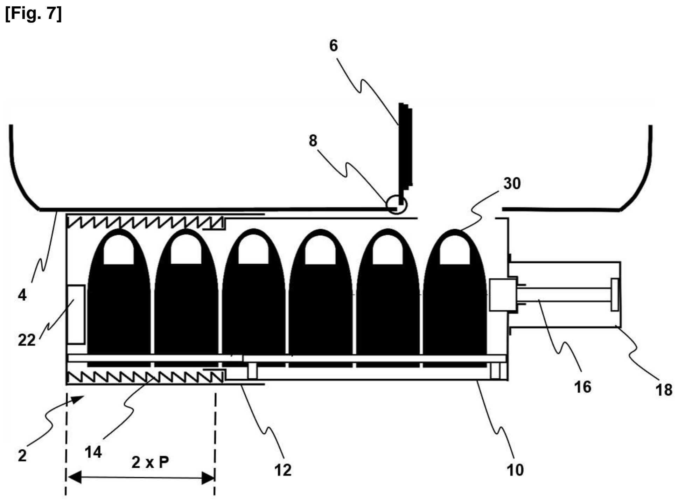

La figure 7 présente après la dépose du cinquième module 60, la poussée de l'ensemble vers l'avant par le vérin 18, puis son retrait, le sixième module est déposé avant de refermer la trappe 6.

Avec six modules 30 dans le caisson 2, sa partie avant mobile 12 et les barres de connexion mobiles 26 sont au bout de leur possibilité de coulissement avec une avance de deux pas 2xP. Le caisson 2 est entièrement rempli avec la capacité maximum de stockage d'énergie pour le véhicule.

Pour le retrait d'un ou plusieurs modules 30 afin de les recharger par un branchement électrique extérieur au véhicule, ou pour réduire le nombre afin d'ajuster la capacité de stockage d'énergie du véhicule si une autonomie réduite est suffisante, on soulève la trappe 6 et on prélève le premier module vers l'arrière.

On obtient alors automatiquement avec les ressorts de traction 14 un rappel vers l'arrière de la partie avant mobile de caisson 12, qui repousse en même temps par la butée avant 22 l'ensemble des cinq modules 30 restant. Le volume extérieur du caisson 2 est réduit au minimum nécessaire.

On obtient avec le caisson de batterie 2 selon l'invention une possibilité d'utilisation d'un même modèle standard sur une large gamme de véhicule, pouvant comporter des capacités de stockage différentes, ainsi que la possibilité sur un même véhicule d'ajuster sa capacité de stockage lors de son usage.

Le nombre de modules 30 ajusté facilement sur chaque véhicule permet d'optimiser suivant les usages sa masse, les coûts de son équipement et les prix de revient de son usage.

L'échange des modules 30 ou la variation du nombre de modules se fait de manière simple et rapide, sans outillage particulier, ce qui favorise les changements avec des modules rechargés pour redonner une autonomie supplémentaire au véhicule avec un délai très court.

D'une manière générale le caisson de batterie 2 selon l'invention peut comporter toutes variantes comprenant des modules 30 empilés suivant l'axe du véhicule ou suivant sa direction transversale, et un chargement de ces modules sur le dessus ou sur un côté du caisson.

## Revendications

1. Caisson de batterie de traction d'un véhicule automobile électrique ou hybride, comportant une ouverture permettant d'entrer un nombre variable de modules (30) de cellules électrochimiques alignés suivant une direction longitudinale, et des barres de connexion électriques (24, 26) recevant chacun de ces modules (30), **caractérisé en ce qu'**il comporte une partie mobile (12) qui se déplace pour s'ajuster au nombre de modules (30) reçus, et **en ce que** les barres de connexion électriques (24, 26) comportent pour chaque pôle électrique du module (30) une barre de connexion fixe (24), et une barre de connexion mobile (26) qui prolonge cette barre fixe (24) en coulissant quand la partie mobile de caisson (12) se déplace en augmentant le volume du caisson (2) , en assurant une connexion électrique à tous les modules reçus (30).

2. Caisson de batterie selon la revendication 1, **caractérisé en ce que** la partie mobile de caisson (12) coulisse suivant la direction longitudinale.

3. Caisson de batterie selon la revendication 2, **caractérisé en ce que** la partie mobile (12) entoure une partie fixe de caisson (10) en coulissant dessus tout en assurant une étanchéité entre ces deux parties (10, 12).

4. Caisson de batterie selon l'une quelconque des revendications précédentes, **caractérisé en ce qu'**il comporte un poussoir (18) disposé suivant la direction longitudinale, poussant les modules (30) après leur dépose en face de l'ouverture dans la direction de déplacement de la partie mobile de caisson (12) qui agrandit le volume du caisson (2).

5. Caisson de batterie selon la revendication 4, **caractérisé en ce que** le poussoir (18) comporte une course suivant un pas (P) qui est égale à la largeur de chaque module (30).

6. Caisson de batterie selon l'une quelconque des revendications précédentes, **caractérisé en ce que** l'ouverture est formée sur le dessus du caisson (2) avec une trappe de fermeture (6) disposant d'une étanchéité.

7. Caisson de batterie selon l'une quelconque des revendications précédentes, **caractérisé en ce que** la partie mobile de caisson (12) comporte des ressorts de rappel (14) qui tendent à réduire le volume du caisson (2).

8. Procédé d'utilisation d'un caisson de batterie selon l'une quelconque des revendications précédentes, **caractérisé en ce qu'**il comporte une étape d'insertion d'un module (30) dans le caisson (2), puis une étape de coulissement de ce module (30) pour le déplacer vers un fond du caisson (2) avec un déplacement de la partie mobile de caisson (12) quand une partie fixe de caisson (10) est remplie.

9. Véhicule automobile électrique ou hybride comportant un caisson de batterie selon l'une quelconque des revendications 1 à 7, **caractérisé en ce que** l'ouverture du caisson (2) est disposée en face d'une ouverture d'un plancher (4) du véhicule.
